# EUROPEAN PATENT APPLICATION

(11) **EP 4 750 099 A1**
(43) Date of publication of application: **27.05.2026**
(21) Application number: 23960477.0
(22) Date of filing: 05.12.2023
(51) Int. Cl.: H04W 4/12

(54) **COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: YANG, Haorui, Dongguan, Guangdong 523860 (CN)
(74) Representative: RGTH
(86) International application number: PCT/CN2023/136575
(87) International publication number: WO 2025/118163

(57) **Abstract**

The present application relates to a communication method, a terminal device, and a network device. The method comprises: a terminal device sends a first message to a first network device, the first message carrying a capability indication of the terminal device, and the capability indication being used for indicating whether the terminal device supports a plurality of user identifiers; and the terminal device receives a second message sent by the first network device, the second message carrying at least one of a first indication and the address of a second network device, and the first indication being used for indicating whether the terminal device is allowed to use the plurality of user identifiers. According to embodiments of the present application, a plurality of user identifiers of the same terminal device can be managed.

## Description

### TECHNICAL FIELD

The present disclosure relates to the field of communications, and more specifically, to communication methods, terminal devices, and network devices.

### BACKGROUND

Existing operator networks can only obtain the identifier (ID) associated with the user equipment (UE) subscription, such as the international mobile subscriber identity (IMSI). However, in a case where a plurality of users share a single UE, the network side cannot differentiate individual users and therefore cannot provide optimized services for each user.

### SUMMARY

Embodiments of the present disclosure provide a communication method, including:
transmitting, by a terminal device, a first message to a first network device, the first message carrying a capability indication of the terminal device, and the capability indication being used to indicate whether the terminal device supports a plurality of user identifiers; and
receiving, by the terminal device, a second message transmitted by the first network device, the second message carrying at least one of a first indication or an address of a second network device, and the first indication being used to indicate whether the terminal device is allowed to use the plurality of user identifiers.

Embodiments of the present disclosure provide a communication method, including:
receiving, by a first network device, a first message transmitted by a terminal device, the first message carrying a capability indication of the terminal device, and the capability indication being used to indicate whether the terminal device supports a plurality of user identifiers; and
transmitting, by the first network device, a second message to the terminal device, the second message carrying at least one of a first indication or an address of a second network device, and the first indication being used to indicate whether the terminal device is allowed to use the plurality of user identifiers.

Embodiments of the present disclosure provide a communication method, including:
receiving, by a second network device, at least one of: a user identifier, an application identifier associated with the user identifier, or an operation indication for the user identifier;
checking, by the second network device, validity of the user identifier; performing, by the second network device, an operation on the user identifier based on a check result; and
transmitting, by the second network device, an operation result for the user identifier.

Embodiments of the present disclosure provide a communication method, including:
receiving, by a fourth network device, a seventh message transmitted by a first network device, the seventh message carrying at least one of: a user identifier, an application identifier associated with the user identifier, or an operation indication for the user identifier; and
transmitting, by the fourth network device, an eighth message to the first network device, the eighth message carrying an operation result for the user identifier.

Embodiments of the present disclosure provide a terminal device, including:
a first transceiver module, configured to transmit a first message to a first network device, the first message carrying a capability indication of the terminal device, the capability indication being used to indicate whether the terminal device supports a plurality of user identifiers; and being further configured to receive a second message transmitted by the first network device, the second message carrying at least one of a first indication or an address of a second network device, the first indication being used to indicate whether the terminal device is allowed to use the plurality of user identifiers.

Embodiments of the present disclosure provide a first network device, including:
a second transceiver module, configured to receive a first message transmitted by a terminal device, the first message carrying a capability indication of the terminal device, the capability indication being used to indicate whether the terminal device supports a plurality of user identifiers; and being further configured to transmit a second message to the terminal device, the second message carrying at least one of a first indication or an address of a second network device, the first indication being used to indicate whether the terminal device is allowed to use the plurality of user identifiers.

Embodiments of the present disclosure provide a second network device, including:
a third transceiver module, configured to receive at least one of: a user identifier, an application identifier associated with the user identifier, or an operation instruction for the user identifier; and being further configured to transmit an operation result for the user identifier; and
a second processing module, configured to check validity of the user identifier and to perform an operation on the user identifier based on a check result.

Embodiments of the present disclosure provide a fourth network device, including:
a fourth transceiver module, configured to receive a seventh message transmitted by a first network device, the seventh message carrying at least one of: a user identifier, an application identifier associated with the user identifier, or an operation indication for the user identifier; and being further configured to transmit an eighth message to the first network device, the eighth message carrying an operation result for the user identifier.

Embodiments of the present disclosure provide a terminal device, including a transceiver, a processor, and a memory. The memory is configured to store a computer program, the transceiver is configured to communicate with other devices, and the processor is configured to call and run the computer program stored in the memory, to cause the terminal device to perform the above communication method.

Embodiments of the present disclosure provide a network device, including a transceiver, a processor, and a memory. The memory is configured to store a computer program, the transceiver is configured to communicate with other devices, and the processor is configured to call and run the computer program stored in the memory, to cause the network device to perform the above communication method.

Embodiments of the present disclosure provide a chip for implementing the above communication method.

Specifically, the chip includes a processor configured to call and run a computer program from a memory, to cause a device equipped with the chip to perform the above communication method.

Embodiments of the present disclosure provide a computer-readable storage medium configured to store a computer program which, when run by a device, causes the device to perform the above communication method.

Embodiments of the present disclosure provide a computer program product, including computer program instructions, and the computer program instructions cause a computer to perform the above communication method.

Embodiments of the present disclosure provide a computer program which, when run on a computer, causes the computer to perform the above communication method.

In the embodiments of the present disclosure, the terminal device transmits the capability indication to the first network device, and receives, from the first network device, the first indication indicating whether the terminal device is allowed to use the plurality of user identifiers, as well as the address of the second network device. The second network device can be configured to manage the plurality of user identifiers of the terminal device. Thereby, differentiated services are provided for a plurality of users sharing the same terminal device.

### BRIEF DESCRIPTION OF THE DRAWINGS

FIG. 1 is a schematic diagram of a 5G system architecture.
FIG. 2 is a schematic flowchart of a communication method 200 according to an embodiment of the present disclosure.
FIG. 3 is a schematic flowchart of a terminal device obtaining a first indication in a communication method according to an embodiment of the present disclosure.
FIG. 4 is a schematic flowchart of message transmission between a terminal device and a second network device in a communication method according to an embodiment of the present disclosure.
FIG. 5 is a schematic flowchart of a communication method 500 according to an embodiment of the present disclosure.
FIG. 6 is a schematic flowchart of a communication method 600 according to an embodiment of the present disclosure.
FIG. 7 is a schematic flowchart of a communication method 700 according to an embodiment of the present disclosure.
FIG. 8 is a flowchart of an implementation manner according to Embodiment I of the present disclosure.
FIG. 9 is a flowchart of an implementation manner according to Embodiment II of the present disclosure.
FIG. 10 is a schematic block diagram of a terminal device 1000 according to an embodiment of the present disclosure.
FIG. 11 is a schematic block diagram of a terminal device 1100 according to an embodiment of the present disclosure.
FIG. 12 is a schematic block diagram of a first network device 1200 according to an embodiment of the present disclosure.
FIG. 13 is a schematic block diagram of a second network device 1300 according to an embodiment of the present disclosure.
FIG. 14 is a schematic block diagram of a fourth network device 1400 according to an embodiment of the present disclosure.
FIG. 15 is a schematic structural diagram of a communication device 1500 according to an embodiment of the present disclosure.
FIG. 16 is a schematic structural diagram of a chip 1600 according to an embodiment of the present disclosure.

### DETAILED DESCRIPTION

Technical solutions in embodiments of the present disclosure will be described below with reference to the accompanying drawings in the embodiments of the present disclosure.

The technical solutions in the embodiments of the present disclosure can be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) system, or other communication systems.

Generally, a traditional communication system supports a limited number of connections and is easy to implement. However, with the development of the communication technology, the mobile communication system supports traditional communication, and further supports, for example, a device to device (D2D) communication, machine to machine (M2M) communication, machine type communication (MTC), vehicle to vehicle (V2V) communication, or vehicle to everything (V2X) communication. The embodiments of the present disclosure may also be applied to those communication systems.

In an implementation manner, the communication system in the embodiments of the present disclosure may be applied to carrier aggregation (CA) scenarios, dual connectivity (DC) scenarios, or standalone (SA) network scenarios.

In an implementation manner, the communication system in the embodiments of the present disclosure may be applied to an unlicensed spectrum, and the unlicensed spectrum may be considered as a shared spectrum; alternatively, the communication system in the embodiments of the present disclosure may be applied to a licensed spectrum, and the licensed spectrum may be considered as a non-shared spectrum.

In the embodiments of the present disclosure, various embodiments are described with reference to a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, or a user apparatus.

The terminal device may be a station (ST) in a WLAN, and may be a cellular phone, a cordless phone, a session initiation protocol (SIP) phone, a wireless local loop (WLL) station, a personal digital assistant (PDA) device, a handheld device with a wireless communication capability, a computing device or other processing devices connected to a wireless modem, a vehicle-mounted device, a wearable device, a terminal device in a next-generation communication system such as an NR network, or a terminal device in a future evolved public land mobile network (PLMN) network.

In the embodiments of the present disclosure, the terminal device may be deployed on land, including indoor or outdoor environments, in forms such as handheld, wearable or in-vehicle; or the terminal device may be deployed on water (e.g., on a steamship); or the terminal device may be deployed in the air (e.g., on an airplane, on a balloon, or on a satellite).

In the embodiments of the present disclosure, the terminal device may be a mobile phone, a pad, a computer with a wireless transceiver capability, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present disclosure, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software supporting, data interaction, and cloud interaction. A generalized wearable smart device includes, for example, a smartwatch or smart glasses, with full functions, large size, and entire or partial functions without relying on a smartphone, as well as, for example, a smart bracelet or smart jewelry for monitoring physical signs, which only focuses on a certain type of application function and needs to be used in conjunction with other devices (such as a smartphone).

In the embodiments of the present disclosure, the network device may be a device for communicating with mobile devices. The network device may be an access point (AP) in a WLAN, and may be an evolutional Node B (eNB or eNodeB) in an LTE, a relay station or an access point, or a vehicle-mounted device, a wearable device, a network device (gNB) in an NR network, or a network device in a future evolved PLMN network or an NTN.

By way of example and not limitation, in the embodiments of the present disclosure, the network device may have mobility characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station provided on land, water, and other locations.

In the embodiments of the present disclosure, the network device may provide a service for a cell, and the terminal device communicates with the network device through transmission resources (e.g., frequency domain resources, or frequency spectrum resources) used by the cell. The cell may be a cell corresponding to the network device (e.g., a base station), or belong to a macro base station or a base station corresponding to a small cell. Small cells here may include a metro cell, a micro cell, a pico cell, a femto cell, etc. These small cells have characteristics of small coverage and low transmit power, and are suitable for providing a data transmission service with high speed.

In the embodiments of the present disclosure, the network device may include an access network device and a core network device. That is, the wireless communication system further includes a plurality of core networks for communicating with access network devices. The access network device may be an evolutional base station (evolutional node B, which may be abbreviated as eNB or e-NodeB), a macro base station, a micro base station (also known as "small base station"), a pico base station, an access point (AP), a transmission point (TP), or a new generation Node B (gNodeB) in a long-term evolution (LTE) system, a next-generation (mobile communication system) (next radio (NR)) system, or an authorized auxiliary access long-term evolution (LAA-LTE) system.

It should be understood that devices with communication capabilities in the network/system in the embodiments of the present disclosure may be referred to as communication devices. The communication devices may include a network device and a terminal device with communication capabilities, and the network device and the terminal device may be specific devices in the embodiments of the present disclosure, which will not be repeated here. The communication devices may further include other devices in the communication system, such as a network controller, a mobility management entity and other network entities, which will not be limited in the embodiments of the present disclosure.

It should be understood that the terms "system" and "network" are often used interchangeably herein. Herein, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

It should be understood that "indicate/indicating" mentioned in the embodiments of the present disclosure may mean a direct indication, or an indirect indication, or may represent an association. For example, A indicates B, which may mean that A directly indicates B (for example, B may be obtained by A) or may mean that A indirectly indicates B (for example, A indicates C, and B may be obtained by C), or may mean that there is an association between A and B.

In the description of the embodiments of the present disclosure, the term "corresponding" may mean that there is a direct correspondence or indirect correspondence between two, or an association between the two, or may mean a relationship of indicating and being indicated or a relationship of configuring and being configured, etc.

To facilitate understanding of the technical solutions in the embodiments of the present disclosure, the related technologies of the embodiments of the present disclosure are described below. The following related technologies, as optional solutions, may be arbitrarily combined with the technical solutions in the embodiments of the present disclosure, and those combined solutions all belong to the protection scope of the embodiments of the present disclosure.

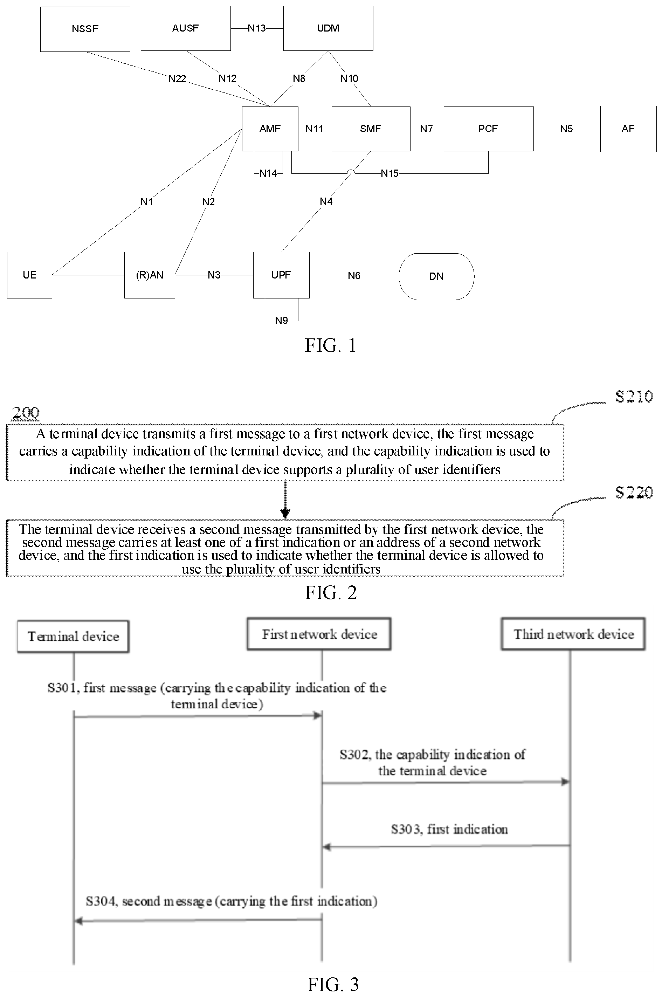

FIG. 1 is a schematic diagram of a 5G system architecture. As shown in FIG. 1, a UE accesses a core network through a base station node (i.e., a radio access network (RAN)/access network (AN) node). In FIG. 1, in addition to the UE, the RAN/AN node and a data network (DN), all other nodes are core network nodes. Furthermore, the core network nodes are divided into user plane function (UPF) nodes and control plane nodes.

In the 3rd Generation Partnership Project (3GPP), by enhancing the 5G system to allow the creation and utilization of user-specific identities, operators will be able to provide enhanced user experiences, optimized performance, and services to devices and users not belonging to the operator 3GPP network. For example, network settings may be adjusted according to user needs and services may be provided for users.

However, existing technologies can only obtain the identifier (ID) corresponding to the UE, e.g., the international mobile subscriber identity (IMSI). In a case where a plurality of users share a single UE, the network side cannot differentiate individual users, making it impossible to provide optimized services for each user of the same UE.

FIG. 2 is a schematic flowchart of a communication method 200 according to an embodiment of the present disclosure. The method may be optionally applied to the system shown in FIG. 1, but is not limited to this. The method includes at least part of the following contents.

In S210, a terminal device transmits a first message to a first network device, the first message carries a capability indication of the terminal device, and the capability indication is used to indicate whether the terminal device supports a plurality of user identifiers.

In S220, the terminal device receives a second message transmitted by the first network device, the second message carries at least one of a first indication or an address of a second network device, and the first indication is used to indicate whether the terminal device is allowed to use the plurality of user identifiers.

Through the embodiment of the present disclosure, the terminal device can receive, from the first network device, the first indication indicating whether the terminal device is allowed to use the plurality of user identifiers, and the address of the second network device, and the second network device can be used to manage the plurality of user identifiers of the terminal device. Thereby, differentiated services are provided for a plurality of users sharing the same terminal device.

In some implementation manners, a "user" may be a human user using a terminal equipment (UE) subscribed with an operator, or may be an account of an application program running on or connected to the UE, or may be a device connected to the UE as a gateway (i.e., a gateway UE or gateway terminal). The user identifier may refer to an identifier of the above-mentioned user, instead of the identifier of the UE (e.g., mobile phone number). Some possible scenarios are as follows:
1. one or more humans share a single terminal device, and each human is a single user of the terminal device;
2. a single gateway terminal is connected to one or more devices, and each device is a single user of the gateway terminal;
3. one or more application programs run on the same terminal device, and an account of each application program is a single user on the terminal device.

In an example, the first network device includes an access and mobility management function (AMF).

In an example, the second network device is a new network function (NF) network element, and the new network function network element (New NF) may be called a user ID management function network element. The second network device may manage the user IDs of the terminal device, for example, perform operations such as user adding, user updating, and user removing on the user IDs of the terminal device.

After the first network device receives the first message transmitted by the terminal device, the first network device may obtain subscription information of the terminal device from a third network device (e.g., a unified data management (UDM) or unified data repository (UDR)), and the subscription information may include information on whether the terminal device is allowed to use the plurality of user identifiers. After the first network device obtains the subscription information of the terminal device from the third network device, the first network device transmits the second message to the terminal device, the second message carries the first indication.

FIG. 3 is a schematic flowchart of a terminal device obtaining a first indication in a communication method according to an embodiment of the present disclosure. The terminal device obtaining the first indication includes the following steps.

In S301, the terminal device transmits a first message to a first network device (e.g., an AMF), the first message carries a capability indication of the terminal device, and the capability indication is used to indicate whether the terminal device supports a plurality of user identifiers. This capability may be called user differentiation, user differentiation service, etc. The first message may include a registration request message. The capability indication may be a single bit. For example, in a case where a value of the capability indication is 0, it means that the terminal device does not support the plurality of user identifiers; and in a case where the value of the capability indication is 1, it means that the terminal device supports the plurality of user identifiers. Alternatively, in a case where the value of the capability indication is 1, it means that the terminal device does not support the plurality of user identifiers; and in a case where the value of the capability indication is 0, it means that the terminal device supports the plurality of user identifiers. The capability indication may be located in a 5G system mobility management (5GS mobility management, 5GMM) capability information element (IE).

In S302, the first network device transmits the capability indication of the terminal device to a third network device (e.g., a UDM or UDR).

In S303, in response to that the terminal device supports the plurality of user identifiers, the third network device transmits the first indication to the first network device; and the first indication is used to indicate whether the terminal device is allowed to use the plurality of user identifiers.

In S304, the first network device transmits a second message to the terminal device, and the second message carries the first indication. The first indication may be used to indicate whether the terminal device is allowed to use the plurality of user identifiers. The first indication may be a single bit. For example, in a case where a value of the first indication is 0, it means that the terminal device is not allowed to use the plurality of user identifiers; and in a case where the value of the first indication is 1, it means that the terminal device is allowed to use the plurality of user identifiers. Alternatively, in a case where the value of the first indication is 1, it means that the terminal device is not allowed to use the plurality of user identifiers; and in a case where the value of the first indication is 0, it means that the terminal device is allowed to use the plurality of user identifiers. Alternatively, the first indication may be a parameter; in a case where the parameter is present, it means that the terminal device is allowed to use the plurality of user identifiers; and in a case where the parameter is not present, it means that the terminal device is not allowed to use the plurality of user identifiers. In a case where the terminal device is allowed to use the plurality of user identifiers, the second message may further carry an address of the second network device, and the address of the second network device may be in a format of a fully qualified domain name (FQDN), or may be an IPv4 address, an IPv6 address, etc.

In a case where the second message carries only the address of the second network device and does not carry the first indication, the address of the second network device implicitly indicates that the terminal device is allowed to use the plurality of user identifiers.

In a case where the second message does not carry the address of the second network device, the terminal device may obtain the address of the second network device locally. For example, the terminal device generates the address of the second network device in FQDN format, and queries an FQDN server for the IPv4 address, the IPv6 address, etc. of the second network device based on the address in FQDN format. Alternatively, the terminal device may obtain the IPv4 address, the IPv6 address, etc. of the second network device locally.

After receiving the address of the second network device, the terminal device may communicate with the second network device in at least two of the following manners, and the second network device performs user management on the terminal device.

### Manner I:

The terminal device and the second network device transmit messages through a user plane. For example, in a case where the terminal device receives the second message and obtains the address of the second network device, the terminal device may establish a protocol data unit (PDU) session with the second network device. The terminal device may obtain, through URSP, parameter(s) corresponding to the PDU session, such as a DNN and S-NSSAI which are specific to the second network device; and the terminal device establishes a user plane connection with the second network device using the address of the second network device, e.g., establishes a TCP connection, and transmits data using an HTTP protocol.

After the terminal device establishes the user plane connection with the second network device, the terminal device may further transmit a third message to the second network device based on the user plane connection. The third message carries at least one of: a user identifier, an application identifier associated with the user identifier, or an operation indication for the user identifier. The third message may include a user ID report message.

For example, the operation indication for the user identifier may include adding the user identifier, updating the user identifier, or removing the user identifier.

In this way, the second network device may perform the operation such as adding, updating or removing on the user identifier carried in the third message transmitted by the terminal device, so as to manage the user identifier of the terminal device. After the second network device performs the operation such as adding, updating or removing on the user identifier, the second network device may transmit a fourth message to the terminal device. The terminal device receives the fourth message transmitted by the second network device, and the fourth message carries an operation result for the user identifier.

After the second network device manages the user identifier of the terminal device, the second network device may transmit the operation result to the third network device (e.g., the UDM or UDR) for storage. For example, the second network device transmits the user identifier (e.g., transmits the user identifier and the identifier of the terminal device) to the third network device, and the third network device stores the user identifier corresponding to the terminal device. Subsequently, other network devices may obtain the user identifier of the terminal device from the second network device, so as to provide different services.

### Manner II:

The terminal device and the second network device transmit messages through a signaling plane.

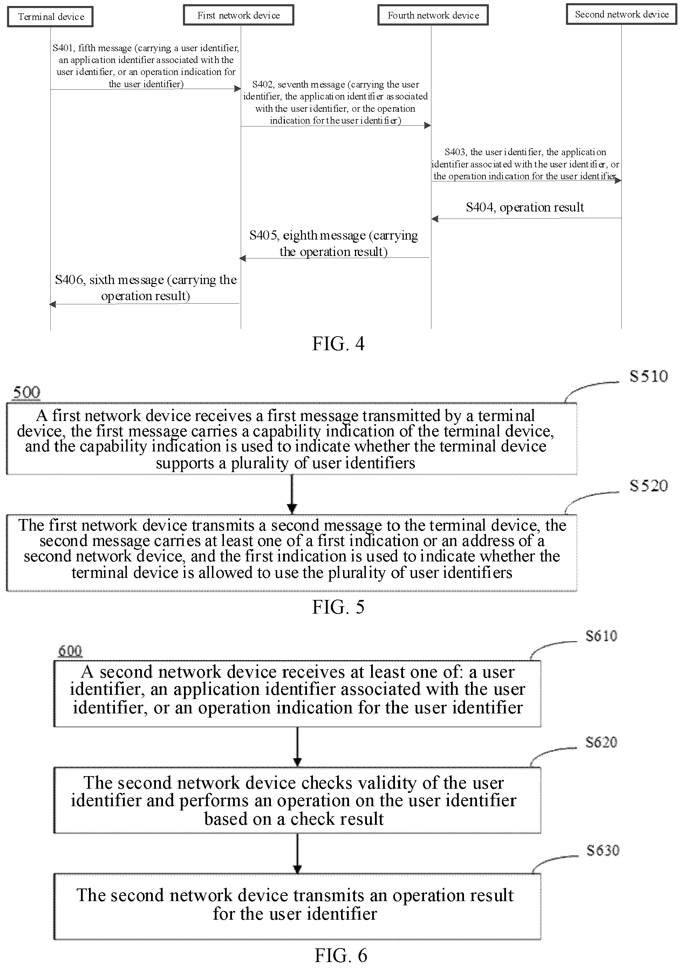

FIG. 4 is a schematic flowchart of message transmission between a terminal device and a second network device in a communication method according to an embodiment of the present disclosure. The message transmission between the terminal device and the second network device includes the following steps.

In S401, the terminal device transmits a fifth message to a first network device (e.g., an AMF), and the fifth message carries at least one of: a user identifier, an application identifier associated with the user identifier, or an operation indication for the user identifier. The operation indication for the user identifier may include adding the user identifier, updating the user identifier, or removing the user identifier.

In an example, the fifth message includes an uplink non-access stratum (NAS) transfer (UL NAS transfer) message; and the fifth message may further carry a data network name (DNN), single network slice selection assistance information (S-NSSAI), etc.

The fifth message may include a PDU session establishment request or a PDU session modification request. The PDU session establishment request or the PDU session modification request carries at least one of: the user identifier, the application identifier associated with the user identifier, or the operation indication for the user identifier.

In S402, the first network device transmits a seventh message to a fourth network device, and the seventh message carries at least one of: the user identifier, the application identifier associated with the user identifier, or the operation indication for the user identifier. The seventh message may include the PDU session establishment request or the PDU session modification request.

In S403, the fourth network device transmits, to the second network device, at least one of: the user identifier, the application identifier associated with the user identifier, or the operation indication for the user identifier.

In S404, the second network device performs an operation such as adding, updating or removing on the user identifier of the terminal device based on received content, so as to manage the user identifier of the terminal device. After the second network device performs the operation such as adding, updating or removing on the user identifier, the second network device transmits an operation result for the user identifier to the fourth network device.

In S405, the fourth network device transmits an eighth message to the first network device, and the eighth message carries the operation result for the user identifier. The eighth message may include PDU session establishment acknowledgement or PDU session modification acknowledgement.

In S406, the first network device transmits a sixth message to the terminal device, and the terminal device receives the sixth message transmitted by the first network device. The sixth message carries the operation result for the user identifier.

In an example, the sixth message includes a downlink NAS transfer (DL NAS transfer) message. Specifically, the sixth message may include a PDU session establishment accept or a PDU session modification command, and the PDU session establishment accept or the PDU session modification command carries the operation result for the user identifier.

In this way, the terminal device and the second network device may transmit messages through the signaling plane, and the second network device manages the user identifier of the terminal device based on an operation request of the terminal device.

Similar to Manner I described above, the second network device may further transmit the operation result to the third network device (e.g., the UDM or UDR) for storage after managing the user identifier of the terminal device. For example, the second network device transmits the user identifier (e.g., transmits the user identifier and the identifier of the terminal device) to the third network device, and the third network device stores the user identifier corresponding to the terminal device. Subsequently, other network devices may obtain the user identifier of the terminal device from the second network device, so as to provide different services.

The embodiments of the present disclosure further provide a communication method, and the communication method can be applied to the first network device described above. FIG. 5 is a schematic flowchart of a communication method 500 according to an embodiment of the present disclosure. The method may be optionally applied to the system shown in FIG. 1, but is not limited to this. The method includes at least part of the following contents.

In S510, the first network device receives a first message transmitted by a terminal device, the first message carries a capability indication of the terminal device, and the capability indication is used to indicate whether the terminal device supports a plurality of user identifiers.

In S520, the first network device transmits a second message to the terminal device, the second message carries at least one of a first indication or an address of a second network device, and the first indication is used to indicate whether the terminal device is allowed to use the plurality of user identifiers.

In this way, in a case where the terminal device supports the plurality of user identifiers and the network also supports the plurality of user identifiers, the first network device may indicate to the terminal device that the terminal device is allowed to use the plurality of user identifiers, and transmit the address of the second network device to the terminal device, so that the terminal device communicates with the second network device. Thereby, the second network device manages the plurality of users of the terminal device.

In some implementation manners, the first network device includes an AMF.

In some implementation manners, the second network device includes a user ID management function network element.

In some implementation manners, before the first network device transmits the second message to the terminal device, the method further includes: transmitting, by the first network device, the capability indication of the terminal device to a third network device; and receiving, by the first network device, the first indication transmitted by the third network device.

The third network device may include a UDM or a UDR.

In some implementation manners, the method further includes: receiving, by the first network device, a fifth message transmitted by the terminal device, the fifth message carrying at least one of: a user identifier, an application identifier associated with the user identifier, or an operation indication for the user identifier. The operation indication for the user identifier may include adding the user identifier, updating the user identifier, or removing the user identifier.

The fifth message may include an uplink NAS transfer message.

In an example, the fifth message includes a PDU session establishment request or a PDU session modification request, and the PDU session establishment request or the PDU session modification request carries at least one of: the user identifier, the application identifier associated with the user identifier, or the operation indication for the user identifier.

The fifth message may further include at least one of: a DNN or S-NSSAI.

In some implementation manners, the method further includes: transmitting, by the first network device, a seventh message to a fourth network device, the seventh message carrying at least one of: the user identifier, the application identifier associated with the user identifier, or the operation indication for the user identifier; and receiving, by the first network device, an eighth message transmitted by the fourth network device, the eighth message carrying an operation result for the user identifier.

The fourth network device may include a session management function (SMF).

The seventh message may include a PDU session establishment request or a PDU session modification request, and the eighth message may include PDU session establishment acknowledgement or PDU session modification acknowledgement.

In some implementation manners, the method further includes: transmitting, by the first network device, a sixth message to the terminal device, the sixth message carrying the operation result for the user identifier.

The sixth message may include a downlink NAS transfer message.

In an example, the sixth message includes the PDU session establishment acknowledgement or the PDU session modification acknowledgement, and the PDU session establishment acknowledgement or the PDU session modification acknowledgement carries the operation result for the user identifier.

As for specific examples of the first network device performing the method 500 in this embodiment, reference can be made to the related descriptions of the first network device such as the AMF in the above methods 200, 300 and 400, which will not be repeated for the sake of brevity.

The embodiments of the present disclosure further provide a communication method, and the communication method can be applied to the above second network device. FIG. 6 is a schematic flowchart of a communication method 600 according to an embodiment of the present disclosure. This method may be optionally applied to the system shown in FIG. 1, but is not limited to this. The method includes at least part of the following contents.

In S610, the second network device receives at least one of: a user identifier, an application identifier associated with the user identifier, or an operation indication for the user identifier.

In S620, the second network device checks validity of the user identifier and performs an operation on the user identifier based on a check result.

In S630, the second network device transmits an operation result for the user identifier.

In this way, after the second network device receives the user identifier of the terminal device and the operation indication, the second network device may perform the corresponding operation on the user identifier of the terminal device, thereby managing the user identifier of the terminal device.

In some implementation manners, the second network device includes a user ID management function network element.

In some implementation manners, the method further includes: transmitting, by the second network device, the user identifier to a third network device. For example, the second network device transmits the user identifier and the identifier of the terminal device (UE ID) to the third network device, and the third network device stores the user identifier of the terminal device.

The third network device may include a UDM or a UDR.

As for specific examples of the second network device performing the method 600 in this embodiment, reference can be made to the related descriptions of the second network device such as the user ID management function network element in the above methods 200, 300 and 400, which will not be repeated for the sake of brevity.

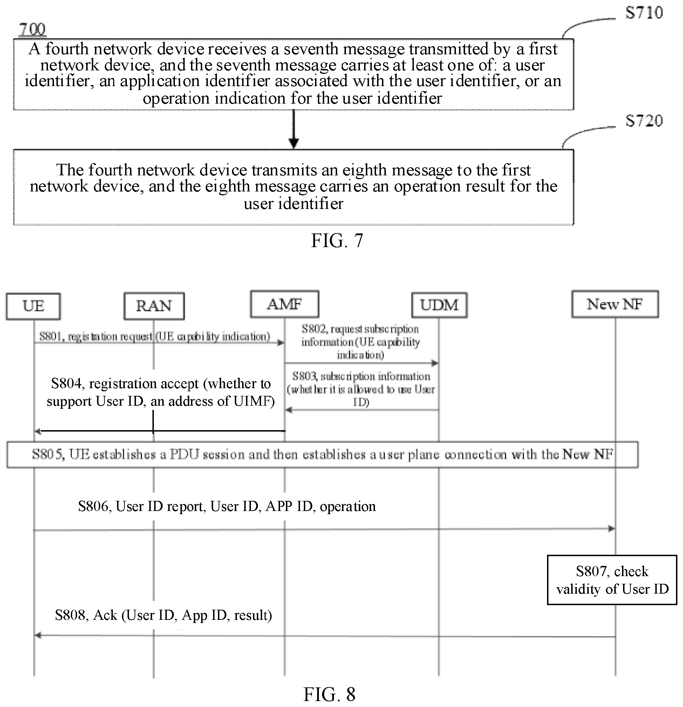

The embodiments of the present disclosure further provide a communication method, and the communication method can be applied to the above fourth network device. FIG. 7 is a schematic flowchart of a communication method 700 according to an embodiment of the present disclosure. This method may be optionally applied to the system shown in FIG. 1, but is not limited to this. The method includes at least part of the following contents.

In S710, the fourth network device receives a seventh message transmitted by a first network device, the seventh message carrying at least one of: a user identifier, an application identifier associated with the user identifier, or an operation indication for the user identifier, and the operation indication for the user identifier may include: adding the user identifier, updating the user identifier, or removing the user identifier.

In S720, the fourth network device transmits an eighth message to the first network device, the eighth message carrying an operation result for the user identifier.

The fourth network device may include an SMF, and the first network device may include an AMF.

The seventh message may include a PDU session establishment request or a PDU session modification request, and the eighth message may include a PDU session establishment accept or a PDU session modification command.

In some implementation manners, after the fourth network device receiving the seventh message transmitted by the first network device, the method further includes:
the fourth network device transmitting, to the second network device, at least one of: the user identifier, the application identifier associated with the user identifier, or the operation indication for the user identifier.

Furthermore, the method may further include: receiving, by the fourth network device, the operation result for the user identifier transmitted by the second network device.

The second network device may include a user ID management function network element.

As for specific examples of the fourth network device performing the method 700 in this embodiment, reference can be made to the related descriptions of the fourth network device such as the SMF in the above methods 200, 300 and 400, which will not be repeated for the sake of brevity.

The present disclosure will now be described in detail with reference to the accompanying drawings and specific embodiments.

### Embodiment I:

In this embodiment, the terminal device and the second network device communicate using the user plane. This embodiment is described by taking an example in which the terminal device is the UE, the first network device is the AMF, the second network device is the new network function network element (New NF) (e.g., the user ID management function network element), and the third network device is the UDM.

FIG. 8 is a flowchart of an implementation manner according to Embodiment I of the present disclosure. The implementation manner includes the following steps.

In S801, the UE transmits, to the AMF, a registration request carrying a UE capability indication for indicating whether the UE supports a plurality of user ID characteristics.

In S802, the AMF requests, from the UDM, subscription information of the UE including the UE capability indication for indicating whether the UE supports the plurality of user ID characteristics.

In S803, the UDM checks the subscription information of the UE, the subscription information may include: information on whether the UE is allowed to use the plurality of user identifiers, the user identifiers, and application (APP) identifiers (APP IDs) corresponding to the user identifiers. The user ID may take the following forms:
in a case where the user is a specific person, the user ID may be an ID card number, passport number, etc.;
in a case where the user is a user of an application, the user ID may be an application-layer user ID, and the application-layer user ID may be associated with an APP ID; or
in a case where the user is a device behind the UE, the user ID may be an ID of the device.

The UDM replies to the AMF with the subscription information of the UE including indication information for indicating whether the UE is allowed to use the plurality of user identifiers. Specifically, if the subscription information of the UE includes the information that the UE is allowed to use the plurality of user identifiers and the network supports the terminal device using the plurality of user identifiers, then the UDM replies to the AMF with the indication information that the UE is allowed to use the plurality of user identifiers. If the subscription information of the UE includes the information that the UE is not allowed to use the plurality of user identifiers and/or the network does not support the terminal device using the plurality of user identifiers, then the UDM replies to the AMF with the indication information that the UE is not allowed to use the plurality of user identifiers.

In S804, the AMF transmits a registration accept message to the UE, and the registration accept message may include the indication information for indicating whether the UE is allowed to use the plurality of user identifiers. If the UE is allowed to use the plurality of user identifiers, then the registration accept message may further include an address of the New NF (e.g., the address of the user ID management function (UIMF)). The address may be in a fully qualified domain name (FQDN) format, or may be an Internet protocol version 4 (IPv4) address or an Internet protocol version 6 (IPv6) address.

In a possible manner, the registration accept message transmitted by the AMF to the UE includes only the address of the New NF, and the address of the New NF implicitly indicates that the network supports and allows the UE to use the plurality of user identifiers.

In a possible manner, the registration accept message transmitted by the AMF to the UE includes the indication information for indicating that the UE is allowed to use the plurality of user identifiers, but does not include the address of the New NF. In this case, the UE may obtain the address of the New NF locally. The obtaining manners may be as follows.

Manner I: the UE itself generates the FQDN address of the New NF and uses the FQDN address to query the corresponding IPv4 address or IPv6 address of the New NF from the FQDN server. One possible form of the FQDN address is: useridmanagementfunction@3gpp.com.

Manner II: the address of the New NF (e.g., the IPv4 address or the IPv6 address) is preconfigured locally on the UE, and the UE obtains the address of the New NF locally.

In S805, the UE establishes a PDU session with the New NF using the UE route selection policy (URSP) mechanism. When establishing the PDU session, a traffic descriptor in the URSP rule may be address information of the New NF, to obtain a PDU session parameter for establishing a user plane connection with the New NF. The UE may also use a default (match-all) PDU session.

After the PDU session is established, the UE establishes a user plane connection with the New NF using the address of the New NF. The user plane connection may be a Hypertext Transfer Protocol (HTTP) connection.

In S806, the UE performs a user identifier related management process with the New NF using the user plane connection. For example, in this step, the UE transmits a user ID report to the New NF to inform a user ID currently using the UE. In a case where the user ID is an application-layer user ID, an associated APP ID may also be transmitted. The user ID report may further include an operation identifier, and the operation identifier is used to indicate that the New NF performs an operation such as adding, updating or removing on the user ID of the UE.

In S807, considering an example in which the New NF performs adding on the user ID, the New NF first checks the validity of the user ID. The new NF may check the validity of the user ID through the UDM. In a case where the user ID is an application-layer user ID, the New NF may further check the validity of the user ID by an application function (AF) associated with the application. In a case where the user ID is valid, the New NF stores the user ID reported by the UE. The new NF may further transmit the user ID and the UE ID of the UE to the UDM/UDR, and the UDM/UDR stores the user ID of the UE.

In S808, the New NF transmits an acknowledgement (ACK) message to the UE, to feed back the operation result of the user ID reported by the UE to the UE. For example, the ACK message may include the user ID, the operation result of the user ID, and the APP ID associated with the user ID.

In this embodiment, the management of the user ID of the UE is implemented. One UE may use a plurality of user IDs, so as to identify different users through the plurality of user IDs, and to provide differentiated services for different users.

### Embodiment II:

In this embodiment, the terminal device and the second network device communicate using the signaling plane. This embodiment is described by taking an example in which the terminal device is the UE, the first network device is the AMF, the second network device is the new network function network element (New NF) (e.g., the user ID management function network element), the third network device is the UDM, and the fourth network device is the SMF.

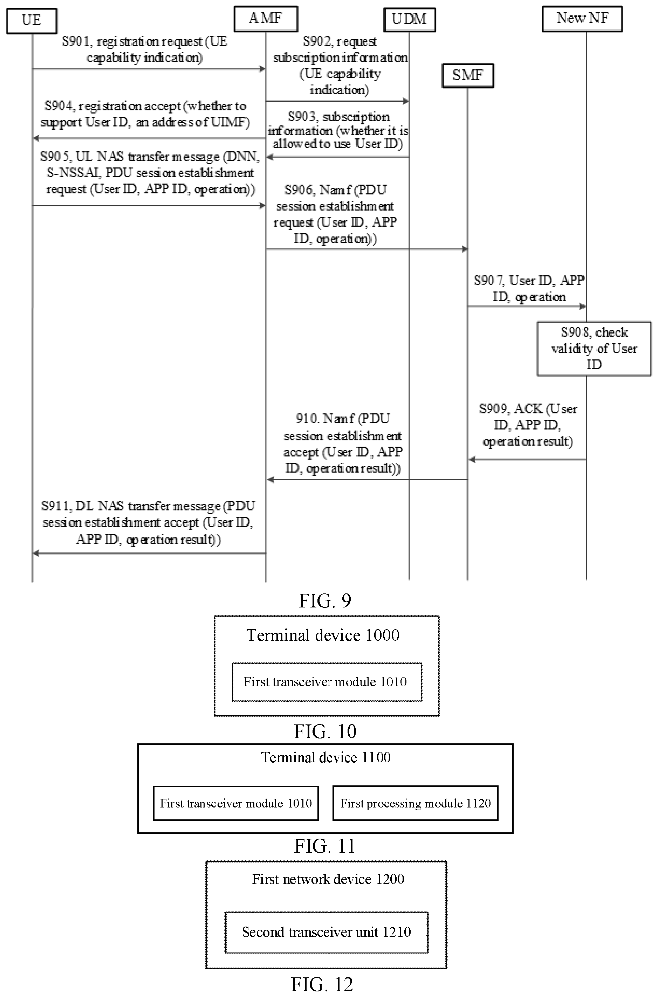

FIG. 9 is a flowchart of an implementation manner according to Embodiment II of the present disclosure. The implementation manner includes the following steps.

S901 to S904 are the same as S801 to S804 in Embodiment I, and reference can be made to the descriptions in Embodiment I.

In S905, the UE establishes a PDU session with the New NF using the URSP mechanism. When establishing the PDU session, a traffic descriptor in the URSP rule may be address information of the New NF, to obtain a PDU session parameter for establishing a user plane connection with the New NF. The UE may also use a default (match-all) PDU session.

Then, the UE transmits an uplink NAS transfer (UL NAS transfer) message to the AMF, and the UL NAS transfer message may include a DNN, S-NSSAI, and a PDU session establishment request/PDU session modification request. The PDU session establishment request/PDU session modification request may include a user ID currently using the UE. In a case where the user ID is an application-layer user ID, an associated APP ID may also be included. The APP ID, the PDU session establishment request/PDU session modification request may further include an operation identifier, and the operation identifier is used to indicate that the New NF performs an operation such as adding, updating or removing on the user ID of the UE.

The DNN and the S-NSSAI may be specific to user ID characteristics.

In S906, the AMF transmits the PDU session establishment request/PDU session modification request to the SMF.

In S907, the SMF receives the PDU session establishment request/PDU session modification request. Through the user ID, the APP ID, and the operation identifier in the PDU session establishment request/PDU session modification request, the PDU session establishment request/PDU session modification request for the user ID management may be known. Therefore, the SMF transmits the user ID, the APP ID, and the operation identifier from the PDU session establishment request/PDU session modification request to the New NF.

In S908, considering an example in which the New NF performs adding on the user ID, the New NF first checks the validity of the user ID. The new NF may check the validity of the user ID through the UDM. In a case where the user ID is an application-layer user ID, the New NF may further check the validity of the user ID by an application function (AF) associated with the application. In a case where the user ID is valid, the New NF stores the user ID reported by the UE. The new NF may further transmit the user ID and the UE ID of the UE to the UDM/UDR, and the UDM/UDR stores the user ID of the UE.

In S909, the New NF transmits an ACK message to the SMF, and the ACK message may include the user ID, the operation result for the user ID, and the APP ID associated with the user ID.

In S910, the SMF replies to the AMF with the PDU session establishment accept/PDU session modification command, and the PDU session establishment accept/PDU session modification command may include the user ID, the operation result for the user ID, and the APP ID associated with user ID.

In S911, the AMF transmits a downlink NAS transfer (DL NAS transfer) message to the UE, the DL NAS transfer message may include the PDU session establishment accept/PDU session modification command, and the PDU session establishment accept/PDU session modification command may include the user ID, the operation result of the user ID, and the APP ID associated with the user ID.

In this embodiment, the management of the user ID of the UE is implemented. One UE may use a plurality of user IDs, so as to identify different users through the plurality of user IDs, and to provide differentiated services for a plurality of different users of the UE.

The embodiments of the present disclosure further provides a terminal device. FIG. 10 is a schematic block diagram of a terminal device 1000 according to an embodiment of the present disclosure. The terminal device 1000 may include:
a first transceiver module 1010, configured to transmit a first message to a first network device, the first message carrying a capability indication of the terminal device, the capability indication being used to indicate whether the terminal device supports a plurality of user identifiers; and being further configured to receive a second message transmitted by the first network device, the second message carrying at least one of a first indication or an address of a second network device, the first indication being used to indicate whether the terminal device is allowed to use the plurality of user identifiers.

FIG. 11 is a schematic block diagram of a terminal device 1100 according to an embodiment of the present disclosure. As shown in FIG. 11, the terminal device 1100 may further include:
a first processing module 1120, configured to establish a user plane connection with the second network device using the address of the second network device.

In some implementation manners, the first processing module 1120 is further configured to establish a PDU session with the second network device.

In some implementation manners, the first transceiver module 1010 is further configured to transmit a third message to the second network device based on the user plane connection, the third message carrying at least one of: a user identifier, an application identifier associated with the user identifier, or an operation indication for the user identifier.

The third message may include a user identifier report message.

In some implementation manners, the first transceiver module 1010 is further configured to receive a fourth message transmitted by the second network device, the fourth message carrying an operation result for the user identifier.

In some implementation manners, the first transceiver module 1010 is further configured to transmit a fifth message to the first network device, the fifth message carrying at least one of: the user identifier, the application identifier associated with the user identifier, or the operation indication for the user identifier.

The fifth message may include an uplink NAS transfer message.

In some implementation manners, the fifth message includes a PDU session establishment request or a PDU session modification request, the PDU session establishment request or the PDU session modification request carrying at least one of: the user identifier, the application identifier associated with the user identifier, or the operation indication for the user identifier.

In some implementation manners, the fifth message further includes at least one of a DNN or S-NSSAI.

In some implementation manners, the first transceiver module 1010 is further configured to receive a sixth message transmitted by the first network device, the sixth message carrying an operation result for the user identifier.

The sixth message may include a downlink NAS transfer message.

In some implementation manners, the sixth message includes a PDU session establishment accept or a PDU session modification command, the PDU session establishment accept or the PDU session modification command carrying the operation result for the user identifier.

In some implementation manners, the first network device includes an AMF.

In some implementation manners, the second network device includes a user identifier management function network element.

The terminal devices 1000 and 1100 in the embodiments of the present disclosure can realize corresponding functions of the terminal device in the above method embodiments. As for processes, functions, implementations, and beneficial effects of various modules (sub-modules, units, or components, etc.) of the terminal devices 1000 and 1100, reference can be made to corresponding descriptions in the above method embodiments, and details will not be repeated here. It should be noted that the functions of the various modules (sub-modules, units, or components, etc.) of the terminal device 400 in the embodiments of the present disclosure may be implemented by different modules (sub-modules, units, or components, etc.) or by the same module (sub-module, unit, or component, etc.).

The embodiments of the present disclosure further provide a first network device. FIG. 12 is a schematic block diagram of a first network device 1200 according to an embodiment of the present disclosure. The first network device 1200 may include:
a second transceiver module 1210, configured to receive a first message transmitted by a terminal device, the first message carrying a capability indication of the terminal device, the capability indication being used to indicate whether the terminal device supports a plurality of user identifiers; and being further configured to transmit a second message to the terminal device, the second message carrying at least one of a first indication or an address of a second network device, the first indication being used to indicate whether the terminal device is allowed to use the plurality of user identifiers.

In some implementation manners, the second transceiver module 1210 is further configured to transmit the capability indication of the terminal device to a third network device.

In some implementation manners, the second transceiver module 1210 is further configured to receive the first indication transmitted by the third network device.

In some implementation manners, the second transceiver module 1210 is further configured to receive a fifth message transmitted by the terminal device, the fifth message carrying at least one of a user identifier, an application identifier associated with the user identifier, or an operation instruction for the user identifier.

The fifth message may include an uplink NAS transfer message.

In some implementation manners, the fifth message includes a PDU session establishment request or a PDU session modification request, and the PDU session establishment request or the PDU session modification request carries at least one of: the user identifier, the application identifier associated with the user identifier, or the operation indication for the user identifier.

In some implementation manners, the fifth message further includes at least one of a DNN or S-NSSAI.

In some implementation manners, the second transceiver module 1210 is further configured to transmit a seventh message to a fourth network device, the seventh message carrying at least one of: the user identifier, the application identifier associated with the user identifier, or the operation indication for the user identifier.

The seventh message may include the PDU session establishment request or the PDU session modification request.

In some implementation manners, the second transceiver module 1210 is further configured to receive an eighth message transmitted by the fourth network device, the eighth message carrying an operation result for the user identifier.

The eighth message may include a PDU session establishment acknowledgement or a PDU session modification acknowledgement.

In some implementation manners, the second transceiver module 1210 is further configured to transmit a sixth message to the terminal device, the sixth message carrying the operation result for the user identifier.

The sixth message may include a downlink NAS transfer message.

In some implementation manners, the sixth message includes the PDU session establishment acknowledgement or the PDU session modification acknowledgement, and the PDU session establishment acknowledgement or the PDU session modification acknowledgement carries the operation result for the user identifier.

In some implementation manners, the third network device includes a UDM or a UDR.

In some implementation manners, the fourth network device includes an SMF.

In some implementation manners, the first network device includes an AMF.

In some implementation manners, the second network device includes a user identifier management function network element.

The first network device 1200 in the embodiments of the present disclosure can realize corresponding functions of the first network device in the above method embodiments. As for processes, functions, implementations, and beneficial effects of various modules (sub-modules, units, or components, etc.) of the first network device 1200, reference can be made to corresponding descriptions in the above method embodiments, and details will not be repeated here. It should be noted that the functions of the various modules (sub-modules, units, or components, etc.) of the first network device 1200 in the embodiments of the present disclosure may be implemented by different modules (sub-modules, units, or components, etc.) or by the same module (sub-module, unit, or component, etc.).

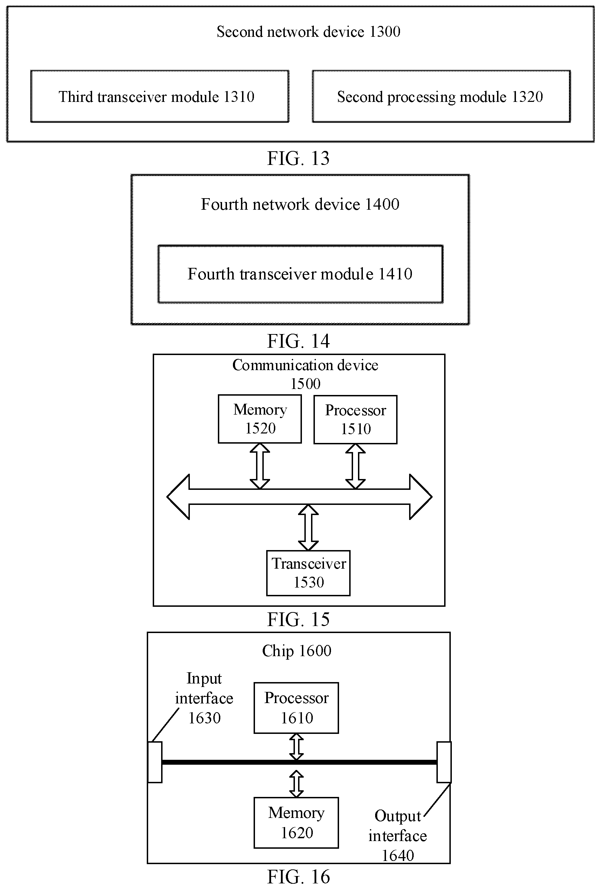

The embodiments of the present disclosure further provide a second network device. FIG. 13 is a schematic block diagram of a second network device 1300 according to an embodiment of the present disclosure. The network device 1300 may include:
a third transceiver module 1310, configured to receive at least one of: a user identifier, an application identifier associated with the user identifier, or an operation indication for the user identifier; and being further configured to transmit an operation result for the user identifier; and
a second processing module 1320, configured to check validity of the user identifier and to perform an operation on the user identifier based on a check result.

In some implementation manners, the third transceiver module 1310 is further configured to transmit the user identifier to a third network device.

In some implementation manners, the third network device includes a UDM or a UDR.

In some implementation manners, the second network device includes a user identifier management function network element.

The second network device 1300 in the embodiments of the present disclosure can realize corresponding functions of the second network device in the above method embodiments. As for processes, functions, implementations, and beneficial effects of various modules (sub-modules, units, or components, etc.) of the second network device 1300, reference can be made to corresponding descriptions in the above method embodiments, and details will not be repeated here. It should be noted that the functions of the various modules (sub-modules, units, or components, etc.) of the second network device 1300 in the embodiments of the present disclosure may be implemented by different modules (sub-modules, units, or components, etc.) or by the same module (sub-module, unit, or component, etc.).

The embodiments of the present disclosure further provide a fourth network device. FIG. 14 is a schematic block diagram of a fourth network device 1400 according to an embodiment of the present disclosure. The fourth network device 1400 may include:
a fourth transceiver module 1410, configured to receive a seventh message transmitted by a first network device, the seventh message carrying at least one of: a user identifier, an application identifier associated with the user identifier, or an operation indication for the user identifier; and being further configured to transmit an eighth message to the first network device, the eighth message carrying an operation result for the user identifier.

In some implementation manners, the seventh message includes a PDU session establishment request or a PDU session modification request.

In some implementation manners, the eighth message includes a PDU session establishment accept or a PDU session modification command.

In some implementation manners, the fourth transceiver module 1410 is further configured to transmit at least one of: the user identifier, the application identifier associated with the user identifier or the operation indication for the user identifier to a second network device.

In some implementation manners, the fourth transceiver module 1410 is further configured to receive the operation result for the user identifier transmitted by the second network device.

In some implementation manners, the fourth network device includes an SMF.

In some implementation manners, the first network device includes an AMF.

In some implementation manners, the second network device includes a user identifier management function network element.

The fourth network device 1400 in the embodiments of the present disclosure can realize corresponding functions of the fourth network device in the above method embodiments. As for processes, functions, implementations, and beneficial effects of various modules (sub-modules, units, or components, etc.) of the fourth network device 1400, reference can be made to corresponding descriptions in the above method embodiments, and details will not be repeated here. It should be noted that the functions of the various modules (sub-modules, units, or components, etc.) of the fourth network device 1400 in the embodiments of the present disclosure may be implemented by different modules (sub-modules, units, or components, etc.) or by the same module (sub-module, unit, or component, etc.).

FIG. 15 is a schematic structural diagram of a communication device 1500 according to an embodiment of the present disclosure. The communication device 1500 includes a processor 1510, and the processor 1510 can call and run a computer program from a memory, to cause the communication device 1500 to implement the method in the embodiments of the present disclosure.

In an implementation manner, the communication device 1500 may further include a memory 1520. The processor 1510 can call and run a computer program from the memory 1520, to cause the communication device 1500 to implement the method in the embodiments of the present disclosure.

The memory 1520 may be a separate device independent of the processor 1510, or may be integrated into the processor 1510.

In an implementation manner, the communication device 1500 may further include a transceiver 1530, and the processor 1510 can control the transceiver 1530 to communicate with another device, specifically, may transmit information or data to the another device or receive information or data transmitted by the another device.

The transceiver 1530 may include a transmitter and a receiver. The transceiver 1530 may further include antenna(s), and there may be one or more antennas.

In an implementation manner, the communication device 1500 may be the network device in the embodiments of the present disclosure, and the communication device 1500 may implement the corresponding processes implemented by the network device in each method in the embodiments of the present disclosure, which will not be repeated here for the sake of brevity.

In an implementation manner, the communication device 1500 may be the terminal device in the embodiments of the present disclosure, and the communication device 1500 may implement the corresponding processes implemented by the terminal device in the each method in the embodiments of the present disclosure, which will not be repeated here for the sake of brevity.

FIG. 16 is a schematic structural diagram of a chip 1600 according to an embodiment of the present disclosure. The chip 1600 includes a processor 1610, and the processor 1610 can call and run a computer program from a memory, to implement the method in the embodiments of the present disclosure.

In an implementation manner, the chip 1600 may further include a memory 1620. The processor 1610 can call and run a computer program from the memory 1620 to implement the method performed by the terminal device or the network device in the embodiments of the present disclosure.

The memory 1620 may be a separate device independent of the processor 1610, or may be integrated into the processor 1610.

In an implementation manner, the chip 1600 may further include an input interface 1630. The processor 1610 may control the input interface 1630 to communicate with another device or another chip, specifically, may obtain information or data transmitted by the another device or the another chip.

In an implementation manner, the chip 1600 may further include an output interface 1640. The processor 1610 may control the output interface 1640 to communicate with another device or another chip, specifically, may output information or data to the another device or the another chip.

In an implementation manner, the chip may be applied to the network device in the embodiments of the present disclosure, and the chip may implement the corresponding processes implemented by the network device in each method in the embodiments of the present disclosure, which will not be repeated here for the sake of brevity.

In an implementation manner, the chip may be applied to the terminal device in the embodiments of the present disclosure, and the chip may implement the corresponding processes implemented by the terminal device in each method in the embodiments of the present disclosure, which will not be repeated here for the sake of brevity.

The chips applied to the network device and the terminal device may be the same chip or different chips.

It should be understood that the chip mentioned in the embodiments of the present disclosure may also be referred to as a system level chip, a system chip, a chip system, or a system-on-chip.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. The general-purpose processor mentioned above may be a microprocessor or any conventional processor.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in the embodiments of the present disclosure is intended to include, but is not limited to, these and any other suitable types of memories.

All or part of the above embodiments may be implemented in a form of software, hardware, firmware, or any combination thereof. When implemented using software, all or part of the above embodiments may be implemented in a form of a computer program product. The computer program product includes one or more computer instructions. When loaded and executed on a computer, the computer program instructions produce, in all or in part, a process or function in accordance with the embodiments of the present disclosure. The computer may be a general-purpose computer, a dedicated computer, a computer network, or any of other programmable apparatuses. The computer instructions may be stored in a computer-readable storage medium or transmitted from one computer-readable storage medium to another computer-readable storage medium. For example, the computer instructions may be transmitted from a website, a computer, server or data center to another website, computer, server or data center through wired manner (e.g., coaxial cable, optical fiber, or digital subscriber line (DSL)) or wireless (e.g., infrared, radio or microwave) manner. The computer-readable storage medium may be any available medium to which a computer can access or may be a data storage device, such as a server or a data center that includes one or more available media. The available medium may be a magnetic medium (e.g., a floppy disk, a hard disk, or a magnetic tape), an optical medium (e.g., a digital video disk (DVD)), or a semiconductor medium (e.g., a solid state disk (SSD)).

It should be understood that in various embodiments of the present disclosure, the magnitude of the serial number of each of the above processes does not mean the sequential order of execution. The order of execution of the processes should be determined by their function and inherent logic without constituting any limitation of the process of implementing the embodiments of the present disclosure.

It may be clearly understood by those skilled in the art that, for convenience and brevity of the description, as for the specific working processes of the system, the apparatus/device and the unit described above, reference can be made to the corresponding processes in the above method embodiments, which will not be repeated here.

The foregoing descriptions are merely specific implementations of the present disclosure, but the protection scope of the present disclosure is not limited thereto. Any skilled person in the art could readily conceive of variations or replacements within the technical scope of the present disclosure, which shall be all included in the protection scope of the present disclosure. Therefore, the protection scope of the present disclosure shall be subject to the protection scope of claims.

## Claims

1. A communication method, comprising:
transmitting, by a terminal device, a first message to a first network device, the first message carrying a capability indication of the terminal device, and the capability indication being used to indicate whether the terminal device supports a plurality of user identifiers; and
receiving, by the terminal device, a second message transmitted by the first network device, the second message carrying at least one of a first indication or an address of a second network device, and the first indication being used to indicate whether the terminal device is allowed to use the plurality of user identifiers.

2. The method according to claim 1, further comprising:
establishing, by the terminal device, a user plane connection with the second network device using the address of the second network device.

3. The method according to claim 2, wherein before establishing, by the terminal device, the user plane connection with the second network device using the address of the second network device, the method further comprises:
establishing, by the terminal device, a protocol data unit (PDU) session with the second network device.

4. The method according to claim 2 or 3, further comprising:
transmitting, by the terminal device, a third message to the second network device based on the user plane connection, the third message carrying at least one of: a user identifier, an application identifier associated with the user identifier, or an operation indication for the user identifier.

5. The method according to claim 4, wherein the third message comprises a user identifier report message.

6. The method according to claim 4 or 5, further comprising:
receiving, by the terminal device, a fourth message transmitted by the second network device, the fourth message carrying an operation result for the user identifier.

7. The method according to claim 1, further comprising:
transmitting, by the terminal device, a fifth message to the first network device, the fifth message carrying at least one of: a user identifier, an application identifier associated with the user identifier, or an operation indication for the user identifier.

8. The method according to claim 7, wherein the fifth message comprises an uplink non-access stratum (NAS) transfer message.

9. The method according to claim 7 or 8, wherein the fifth message carrying at least one of: the user identifier, the application identifier associated with the user identifier, or the operation indication for the user identifier, comprises:
the fifth message comprising a PDU session establishment request or a PDU session modification request, the PDU session establishment request or the PDU session modification request carrying at least one of: the user identifier, the application identifier associated with the user identifier, or the operation indication for the user identifier.

10. The method according to claim 9, wherein the fifth message further comprises at least one of a data network name (DNN) or single-network slice selection assistance information (S-NSSAI).

11. The method according to any one of claims 7 to 10, further comprising:
receiving, by the terminal device, a sixth message transmitted by the first network device, the sixth message carrying an operation result for the user identifier.

12. The method according to claim 11, wherein the sixth message comprises a downlink NAS transfer message.

13. The method according to claim 11 or 12, wherein the sixth message carrying the operation result for the user identifier comprises:
the sixth message comprising a PDU session establishment accept or a PDU session modification command, wherein the PDU session establishment accept or the PDU session modification command carries the operation result for the user identifier.

14. The method according to any one of claims 1 to 13, wherein the first network device comprises an access and mobility management function (AMF).

15. The method according to any one of claims 1 to 13, wherein the second network device comprises a user identifier management function network element.

16. A communication method, comprising:
receiving, by a first network device, a first message transmitted by a terminal device, the first message carrying a capability indication of the terminal device, and the capability indication being used to indicate whether the terminal device supports a plurality of user identifiers; and
transmitting, by the first network device, a second message to the terminal device, the second message carrying at least one of a first indication or an address of a second network device, and the first indication being used to indicate whether the terminal device is allowed to use the plurality of user identifiers.

17. The method according to claim 16, wherein before transmitting, by the first network device, the second message to the terminal device, the method further comprises:
transmitting, by the first network device, the capability indication of the terminal device to a third network device.

18. The method according to claim 17, further comprising:
receiving, by the first network device, the first indication transmitted by the third network device.

19. The method according to any one of claims 16 to 18, further comprising:
receiving, by the first network device, a fifth message transmitted by the terminal device, the fifth message carrying at least one of: a user identifier, an application identifier associated with the user identifier, or an operation indication for the user identifier.

20. The method according to claim 19, wherein the fifth message comprises an uplink non-access stratum (NAS) transfer message.

21. The method according to claim 20, wherein the fifth message carrying at least one of: the user identifier, the application identifier associated with the user identifier, or the operation indication for the user identifier, comprises:
the fifth message comprising a protocol data unit (PDU) session establishment request or a PDU session modification request, the PDU session establishment request or the PDU session modification request carrying at least one of: the user identifier, the application identifier associated with the user identifier, or the operation indication for the user identifier.

22. The method according to claim 21, wherein the fifth message further comprises at least one of a data network name (DNN) or single-network slice selection assistance information (S-NSSAI).

23. The method according to any one of claims 19 to 22, further comprising:
transmitting, by the first network device, a seventh message to a fourth network device, the seventh message carrying at least one of: the user identifier, the application identifier associated with the user identifier, or the operation indication for the user identifier.

24. The method according to claim 23, wherein the seventh message comprises a PDU session establishment request or a PDU session modification request.

25. The method according to claim 23 or 24, further comprising:
receiving, by the first network device, an eighth message transmitted by the fourth network device, the eighth message carrying an operation result for the user identifier.

26. The method according to claim 25, wherein the eighth message comprises a PDU session establishment acknowledgement or a PDU session modification acknowledgement.

27. The method according to claim 25 or 26, further comprising:
transmitting, by the first network device, a sixth message to the terminal device, the sixth message carrying the operation result for the user identifier.

28. The method according to claim 27, wherein the sixth message comprises a downlink NAS transfer message.

29. The method according to claim 27 or 28, wherein the sixth message carrying the operation result for the user identifier comprises:
the sixth message comprising a PDU session establishment acknowledgement or a PDU session modification acknowledgement, the PDU session establishment acknowledgement or the PDU session modification acknowledgement carrying the operation result for the user identifier.

30. The method according to claim 17 or 18, wherein the third network device comprises a unified data management (UDM) or a unified data repository (UDR).

31. The method according to any one of claims 23 to 29, wherein the fourth network device comprises a session management function (SMF).

32. The method according to any one of claims 16 to 31, wherein the first network device comprises an access and mobility management function (AMF).

33. The method according to any one of claims 16 to 31, wherein the second network device comprises a user identifier management function network element.

34. A communication method, comprising:
receiving, by a second network device, at least one of: a user identifier, an application identifier associated with the user identifier, or an operation indication for the user identifier;
checking, by the second network device, validity of the user identifier; performing, by the second network device, an operation on the user identifier based on a check result; and
transmitting, by the second network device, an operation result for the user identifier.

35. The method according to claim 34, further comprising:
transmitting, by the second network device, the user identifier to a third network device.

36. The method according to claim 35, wherein the third network device comprises a unified data management unit (UDM) or a unified data repository (UDR).

37. The method according to any one of claims 34 to 36, wherein the second network device comprises a user identifier management function network element.

38. A communication method, comprising:
receiving, by a fourth network device, a seventh message transmitted by a first network device, the seventh message carrying at least one of: a user identifier, an application identifier associated with the user identifier, or an operation indication for the user identifier; and
transmitting, by the fourth network device, an eighth message to the first network device, the eighth message carrying an operation result for the user identifier.

39. The method according to claim 38, wherein the seventh message comprises a protocol data unit (PDU) session establishment request or a PDU session modification request.

40. The method according to claim 38, wherein the eighth message comprises a PDU session establishment accept or a PDU session modification command.

41. The method according to any one of claims 38 to 40, wherein after receiving, by the fourth network device, the seventh message transmitted by the first network device, the method further comprises:
transmitting, by the fourth network device, at least one of: the user identifier, the application identifier associated with the user identifier, or the operation indication for the user identifier to a second network device.

42. The method according to claim 41, wherein after transmitting, by the fourth network device, at least one of: the user identifier, the application identifier associated with the user identifier, or the operation indication for the user identifier to the second network device, the method further comprises:
receiving, by the fourth network device, the operation result for the user identifier transmitted by the second network device.

43. The method according to any one of claims 38 to 42, wherein the fourth network device comprises a session management function (SMF).

44. The method according to any one of claims 38 to 42, wherein the first network device comprises an access and mobility management function (AMF).

45. The method according to claim 41 or 42, wherein the second network device comprises a user identifier management function network element.

46. A terminal device, comprising:
a first transceiver module, configured to transmit a first message to a first network device, the first message carrying a capability indication of the terminal device, the capability indication being used to indicate whether the terminal device supports a plurality of user identifiers; and being further configured to receive a second message transmitted by the first network device, the second message carrying at least one of a first indication or an address of a second network device, the first indication being used to indicate whether the terminal device is allowed to use the plurality of user identifiers.

47. A first network device, comprising:
a second transceiver module, configured to receive a first message transmitted by a terminal device, the first message carrying a capability indication of the terminal device, the capability indication being used to indicate whether the terminal device supports a plurality of user identifiers; and being further configured to transmit a second message to the terminal device, the second message carrying at least one of a first indication or an address of a second network device, the first indication being used to indicate whether the terminal device is allowed to use the plurality of user identifiers.

48. A second network device, comprising:
a third transceiver module, configured to receive at least one of: a user identifier, an application identifier associated with the user identifier, or an operation indication for the user identifier; and being further configured to transmit an operation result for the user identifier; and
a second processing module, configured to check validity of the user identifier and to perform an operation on the user identifier based on a check result.

49. A fourth network device, comprising:
a fourth transceiver module, configured to receive a seventh message transmitted by a first network device, the seventh message carrying at least one of: a user identifier, an application identifier associated with the user identifier, or an operation indication for the user identifier; and being further configured to transmit an eighth message to the first network device, the eighth message carrying an operation result for the user identifier.

50. A terminal device, comprising: a transceiver, a processor, and a memory, wherein the memory is configured to store a computer program, the transceiver is configured to communicate with other devices, and the processor is configured to call and run the computer program stored in the memory, to cause the terminal device to perform the method according to any one of claims 1 to 15.

51. A network device comprising: a transceiver, a processor, and a memory, wherein the memory is configured to store a computer program, the transceiver is configured to communicate with other devices, and the processor is configured to call and run the computer program stored in the memory, to cause the network device to perform the method according to any one of claims 16 to 45.

52. A chip, comprising: a processor configured to call and run a computer program from a memory, to cause a device equipped with the chip to perform the method according to any one of claims 1 to 45.

53. A computer-readable storage medium, configured to store a computer program, wherein the computer program, when run by a device, causes the device to perform the method according to any one of claims 1 to 45.

54. A computer program product, comprising computer program instructions, wherein the computer program instructions cause a computer to perform the method according to any one of claims 1 to 45.

55. A computer program, the computer program causing a computer to perform the method according to any one of claims 1 to 45.
